# EUROPEAN PATENT APPLICATION

(11) **EP 4 578 271 A1**
(43) Date of publication of application: **02.07.2025**
(21) Application number: 24216708.8
(22) Date of filing: 02.12.2024
(51) Int. Cl.: A01G 3/053

(54) **HEDGE TRIMMER**

(30) Priority: 29.12.2023 CN 202323660965 U; 29.12.2023 CN 202311864971
(71) Applicant: Nanjing Chervon Industry Co., Ltd., Nanjing, Jiangsu 211106 (CN)
(72) Inventor: LI, Yang, Nanjing (CN); XU, Yifan, Nanjing (CN); WANG, Han, Nanjing (CN); ZHAN, Rui, Nanjing (CN)
(74) Representative: Sun, Yiming

(57) **Abstract**

A hedge trimmer includes a body including a housing; a power device including a motor disposed in the housing and configured to drive the hedge trimmer to work; and a battery pack for providing energy for the motor. The motor includes a stator and a rotor, an outer diameter of the motor is greater than or equal to 45 mm and less than or equal to 70 mm, the stator includes a core formed by multiple laminations stacked, the core has a stack length in a direction in which the laminations are stacked, the stack length of the stator is greater than or equal to 20 mm and less than or equal to 35 mm, and the ratio of the outer diameter of the motor to the stack length is greater than or equal to 1.7 and less than or equal to 3.

## Description

This application claims priority to Chinese Patent Application No. 202323660965.7 filed with the China National Intellectual Property Administration (CNIPA) on Dec. 29, 2023 and Chinese Patent Application No. 202311864971.6 filed with the CNIPA on Dec. 29, 2023, the disclosures of which are incorporated herein by reference in their entireties.

### TECHNICAL FIELD

The present application relates to the field of power tools and, in particular, to a hedge trimmer.

### BACKGROUND

A hedge trimmer in the related art is generally used for trimming bushes or trees. The hedge trimmer includes a reciprocating blade assembly. A user sweeps the hedge trimmer across plants to operate the hedge trimmer to trim the messy branches and leaves of the plants. Generally, the hedge trimmer using a battery as a power source requires the battery to be replaced or charged after the battery is used up. A motor of the hedge trimmer has poor efficiency, resulting in a short battery life of the hedge trimmer. Therefore, the battery needs to be charged or replaced frequently, and the hedge trimmer is inconvenient to use.

This part provides background information related to the present application, and the background information is not necessarily the existing art.

### SUMMARY

An object of the present application is to solve or at least alleviate part or all of the preceding problems. Therefore, an object of the present application is to provide a hedge trimmer convenient to use and with a long battery life.

A hedge trimmer includes a body including a housing; a power device including a motor disposed in the housing and configured to drive the hedge trimmer to work; and a battery pack for providing energy for the motor. The motor includes a stator and a rotor; the outer diameter of the motor is greater than or equal to 45 mm and less than or equal to 70 mm; the stator includes a core formed by multiple laminations stacked, and the core has a stack length in a direction in which the laminations are stacked; and the ratio of the outer diameter of the motor to the stack length is greater than or equal to 1.7 and less than or equal to 3.

A hedge trimmer includes a body including a housing; a power device including a motor disposed in the housing and configured to drive the hedge trimmer to work; and a battery pack for providing energy for the motor. The motor includes a stator and a rotor; the outer diameter of the motor is greater than or equal to 45 mm and less than or equal to 70 mm; the stator includes a core formed by multiple laminations stacked, the core has a stack length in a direction in which the laminations are stacked, and the stack length of the stator is greater than or equal to 20 mm and less than or equal to 35 mm; and the ratio of the outer diameter of the motor to the stack length is greater than or equal to 1.7 and less than or equal to 3.

A hedge trimmer includes a body including a housing; a power device including a motor disposed in the housing and configured to drive the hedge trimmer to work; and a battery pack for providing energy for the motor. The motor includes a stator and a rotor; the outer diameter of the motor is greater than or equal to 50 mm and less than or equal to 65 mm; the stator includes a core formed by multiple laminations stacked, and the core has a stack length in a direction in which the laminations are stacked; and the ratio of the outer diameter of the motor to the stack length is greater than or equal to 2.2 and less than or equal to 2.8.

A hedge trimmer includes a body including a housing; a power device including a motor disposed in the housing and configured to drive the hedge trimmer to work; and a battery pack for providing energy for the motor. The motor includes a stator and a rotor; the outer diameter of the motor is greater than or equal to 50 mm and less than or equal to 65 mm; a length by which the motor extends along a motor shaft is greater than or equal to 18 mm and less than or equal to 40 mm; and the stator includes a core formed by multiple laminations stacked, the core has a stack length in a direction in which the laminations are stacked, and the stack length of the stator is greater than or equal to 20 mm and less than or equal to 35 mm.

In some examples, the idle speed of the motor is greater than or equal to 8000 rpm and less than or equal to 9000 rpm.

In some examples, a transmission mechanism is further included, where the transmission mechanism includes a first gear and a second gear that are externally engaged, and the gear ratio of the second gear to the first gear is greater than or equal to 3 and less than or equal to 6.

In some examples, a blade assembly is further included, where the blade assembly is configured to perform a reciprocating motion and includes multiple teeth extending in the same direction.

In some examples, in the case where the blade assembly is lifted horizontally and one end of the blade assembly is fixed, a free end of the blade assembly drops by a height of less than 10 mm.

In some examples, the power device includes a fan and a bearing that at least partially rotate synchronously with the motor, when the motor rotates with no load, the motor, the fan, and the bearing generate an electromagnetic loss, a fan loss, and a bearing loss, respectively, a sum of the electromagnetic loss, the fan loss, and the bearing loss is defined as a total loss, the ratio of the electromagnetic loss to the total loss is greater than or equal to 50 and less than or equal to 80, the ratio of the fan loss to the total loss is greater than or equal to 1 and less than or equal to 5, and the ratio of the bearing loss to the total loss is greater than or equal to 10 and less than or equal to 40.

In some examples, the total loss is greater than or equal to 60 W and less than or equal to 100 W

In some examples, the electromagnetic loss is greater than or equal to 40 W and less than or equal to 60 W, the fan loss is greater than or equal to 2 W and less than or equal to 5 W, and the bearing loss is greater than or equal to 15 W and less than or equal to 30 W

In some examples, the power device includes a fan and a bearing that at least partially rotate synchronously with the motor, when the motor rotates with no load, the motor, the fan, and the bearing generate an electromagnetic loss, a fan loss, and a bearing loss, respectively, a sum of the electromagnetic loss, the fan loss, and the bearing loss is defined as a total loss, the ratio of the electromagnetic loss to the total loss is greater than or equal to 55 and less than or equal to 78, the ratio of the fan loss to the total loss is greater than or equal to 1.5 and less than or equal to 4, and the ratio of the bearing loss to the total loss is greater than or equal to 13 and less than or equal to 35.

In some examples, the motor includes a motor shaft, and a length by which the motor extends along the motor shaft is greater than or equal to 18 mm and less than or equal to 40 mm.

In some examples, the outer diameter of the stator is greater than or equal to 40 mm and less than or equal to 70 mm, and the stack length is greater than or equal to 20 mm and less than or equal to 35 mm.

In some examples, the hedge trimmer includes an eccentric assembly, where the ratio of the idle speed of the eccentric assembly to the eccentricity of the eccentric assembly is greater than or equal to 180 rpm/mm and less than or equal to 315 rpm/mm.

In some examples, a blade assembly configured to perform a reciprocating motion and a support member configured to support the blade assembly are further included, where the torsional stiffness of the support member is greater than or equal to 45 N m/° and less than or equal to 55 N m/°.

In some examples, a blade assembly configured to perform a reciprocating motion and a support member configured to support the blade assembly are further included, where the length of the support member is greater than or equal to 400 mm and less than or equal to 1000 mm.

In some examples, the ratio of the thickness to the width of the support member is greater than or equal to 0.4 and less than or equal to 0.6.

In some examples, the ratio of the outer diameter of the motor to the stack length is greater than or equal to 2.2 and less than or equal to 2.8.

In some examples, the ratio of the outer diameter of the motor to the stack length is greater than or equal to 2 and less than or equal to 4.

In some examples, the outer diameter of the motor is greater than or equal to 50 mm and less than or equal to 65 mm.

In some examples, the output voltage of the battery pack is greater than or equal to 40 V and less than or equal to 62 V and the output current of the battery pack is greater than or equal to 1 A and less than or equal to 1.5 A.

The present application has the following benefits: the hedge trimmer is convenient to use and has a long battery life.

### BRIEF DESCRIPTION OF DRAWINGS

FIG. 1 is a perspective view of a hedge trimmer according to an example of the present application.
FIG. 2 is a rear view of the hedge trimmer of FIG. 1.
FIG. 3 is a sectional view of the hedge trimmer of FIG. 2 along x1.
FIG. 4 is a perspective view of a support member of the hedge trimmer of FIG. 1.
FIG. 5 is a rear view of the support member of the hedge trimmer of FIG. 4.
FIG. 6 is an enlarged view of a transmission mechanism of the hedge trimmer of FIG. 3.
FIG. 7 is a perspective view of a power device of the hedge trimmer of FIG. 1.
FIG. 8 is a side view of a motor and a motor shaft of the hedge trimmer of FIG. 1.
FIG. 9 is a side view of the motor and the motor shaft of the hedge trimmer of FIG. 8 along x2.
FIG. 10 is a top view of a motor and a motor shaft of the hedge trimmer of FIG. 1.
FIG. 11 is a side view of a stator of the hedge trimmer of FIG. 1.
FIG. 12 is a top view of a stator of the hedge trimmer of FIG. 1.
FIG. 13 is a pie chart illustrating the ratios of an electromagnetic loss, fan loss, and bearing loss to a total loss in schemes 1 to 6 of the hedge trimmer of FIG. 1, which are obtained through a simulation model.
FIG. 14 is a graph illustrating relationships between the torque of the hedge trimmer and the rotational speed of the hedge trimmer for the hedge trimmer of FIG. 1 and a common hedge trimmer.
FIG. 15 is a graph illustrating relationships between the torque of the hedge trimmer and the output current of a battery pack for the hedge trimmer of FIG. 1 and a common hedge trimmer.
FIG. 16 is a graph illustrating relationships between the torque of the hedge trimmer and the efficiency of the hedge trimmer for the hedge trimmer of FIG. 1 and a common hedge trimmer.
FIG. 17 is a graph illustrating relationships between a gear ratio, no-load power consumption, and a heavy-load current for the hedge trimmer of FIG. 1 and a common hedge trimmer.
FIG. 18 is a perspective view of a hedge trimmer according to another example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions of the present application are further described below in conjunction with drawings and examples.

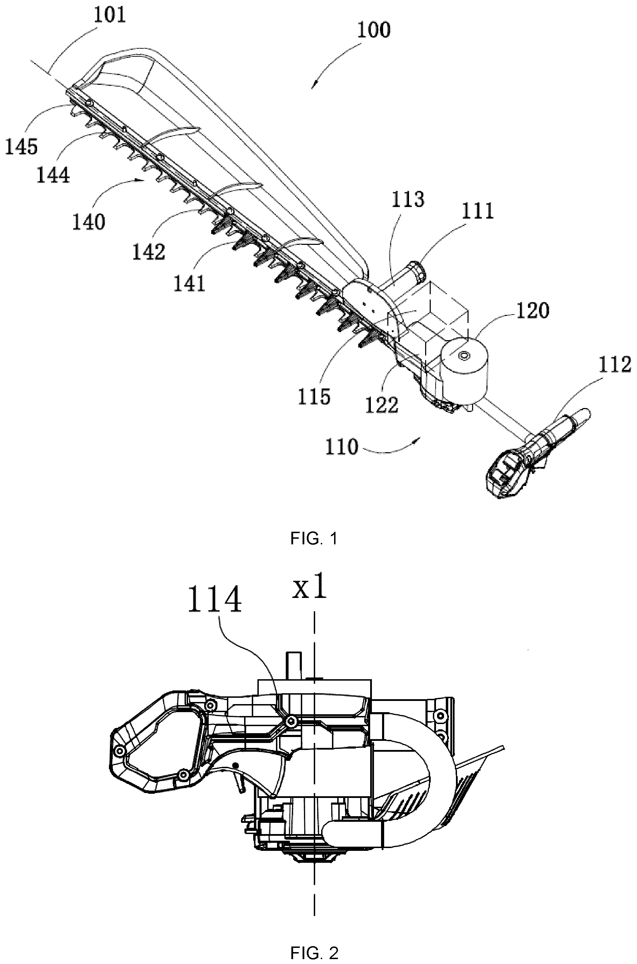

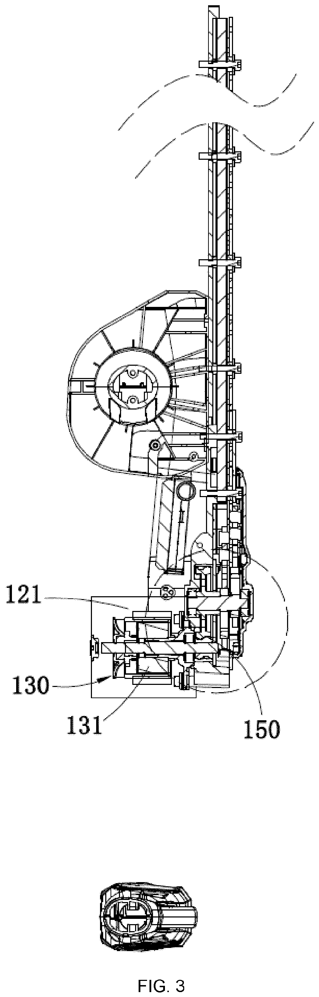

This example provides a hedge trimmer 100. As shown in FIGS. 1 to 3, the hedge trimmer 100 of this example is a single-sided hedge trimmer 100. The length of the hedge trimmer 100 is greater than or equal to 900 mm and less than or equal to 1500 mm. A user generally walks in one direction to use the hedge trimmer 100. In some examples, the hedge trimmer 100 may be a double-sided hedge trimmer 100. The hedge trimmer 100 includes a first handle 111, a second handle 112, and a body 110. The first handle 111 and the second handle 112 are disposed on an intermediate portion and a rear portion of the body 110, respectively. The first handle 111 includes a first grip 113 and the second handle 112 includes a second grip 114. The first grip 113 and the second grip 114 are held by the left and right hands of the user, respectively so that the user walks with the hedge trimmer 100 carried by both hands. The body 110 includes a housing 120, and an accommodation cavity 121 is formed on the inner side of the housing 120. The hedge trimmer 100 includes a power device 130. The power device 130 includes a motor 131 mounted in the accommodation cavity 121. The motor 131 drives the hedge trimmer 100 to perform trimming. In this example, the motor 131 is an electric motor. The idle speed of the motor 131 is greater than or equal to 8000 rpm and less than or equal to 9000 rpm. In some examples, the idle speed of the motor 131 is greater than or equal to 8200 rpm and less than or equal to 8800 rpm. In some examples, the idle speed of the motor 131 is greater than or equal to 8300 rpm and less than or equal to 8600 rpm. The housing 120 includes a coupling portion 122. The coupling portion 122 is used for connecting a direct current power supply. In this example, a battery pack 115 is detachably mounted to the coupling portion 122. The battery pack 115 provides energy for the motor 131, and the energy is electrical energy. The battery pack 115 may include cylindrical cells or pouch cells.

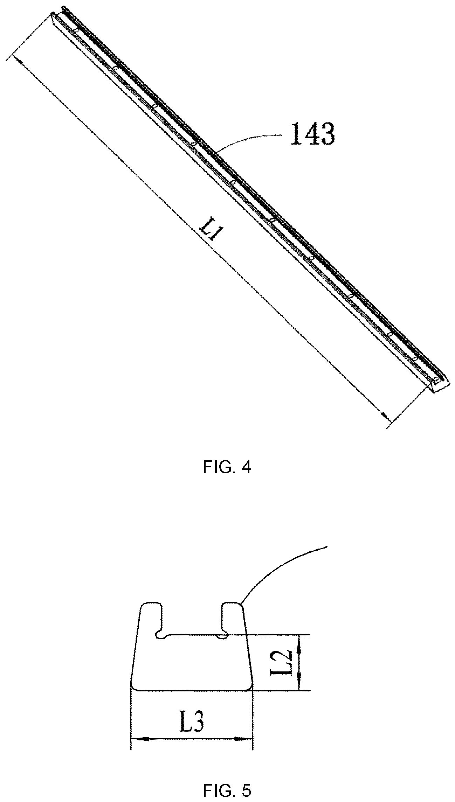

As shown in FIGS. 1 to 5, the hedge trimmer 100 further includes a blade assembly 140 and a transmission mechanism 150, and the transmission mechanism 150 connects the motor 131 drivingly to the blade assembly 140. In this manner, the electrical energy is transmitted to the motor 131, and a driving force of the motor 131 is transmitted to the blade assembly 140 through the transmission mechanism 150. The blade assembly 140 is driven to reciprocate by the motor 131 and the transmission mechanism 150. The blade assembly 140 includes a first blade 141, a second blade 142, and a support member 143. The blade assembly 140 includes multiple teeth 144 extending in the same direction. The first blade 141 and the second blade 142 extend substantially along a first straight line 101, and an extension direction of the multiple teeth 144 is substantially perpendicular to the first straight line 101. The support member 143 supports the motion of at least part of the blades. The blade assembly 140 shakes in motion, and the shaking causes the first blade 141 and the second blade 142 to rub against each other, increasing a power loss and reducing a battery life. The first blade 141 and the second blade 142 droop under the action of gravity, increasing the friction between the first blade 141 and the second blade 142. The torsional stiffness of the support member 143 is greater than or equal to 45 N m/° and less than or equal to 55 N m/°. In this manner, the support member 143 can provide sufficient support for the blade assembly 140, and the blade assembly 140 shakes to a small extent and has a small friction degree and a small power loss during the reciprocating motion. The support member 143 has a length L1, a thickness L2, and a width L3, as shown in FIGS. 4 and 5. The length L1 of the support member 143 is greater than or equal to 400 mm and less than or equal to 1000 mm. A sum of the weight of the first blade 141 and the weight of the second blade 142 is greater than or equal to 360 g and less than or equal to 440 g. The ratio of the thickness L2 to the width L3 of the support member 143 is greater than or equal to 0.4 and less than or equal to 0.6. In this manner, the ratio of the thickness L2 to the width L3 of the support member 143 is relatively high, and the support member 143 has high strength and can stably support the blade assembly 140 relatively long in length.

When one end of the blade assembly 140 is fixed and the blades are lifted horizontally, a free end 145 of the blade assembly 140 drops by a height of less than 10 mm due to the gravity of the blade assembly 140. In some examples, the free end of the blade assembly 140 drops by a height of less than or equal to 5 mm. In some examples, the free end of the blade assembly 140 drops by a height of less than or equal to 2 mm. In some examples, the free end of the blade assembly 140 drops by a height of less than or equal to 1 mm. Due to the support member 143 with relatively great stiffness and strength, the free end of the blade assembly 140 drops by a small height under gravity, the blade assembly 140 shakes to a small degree and has small friction, and the whole machine has a small loss.

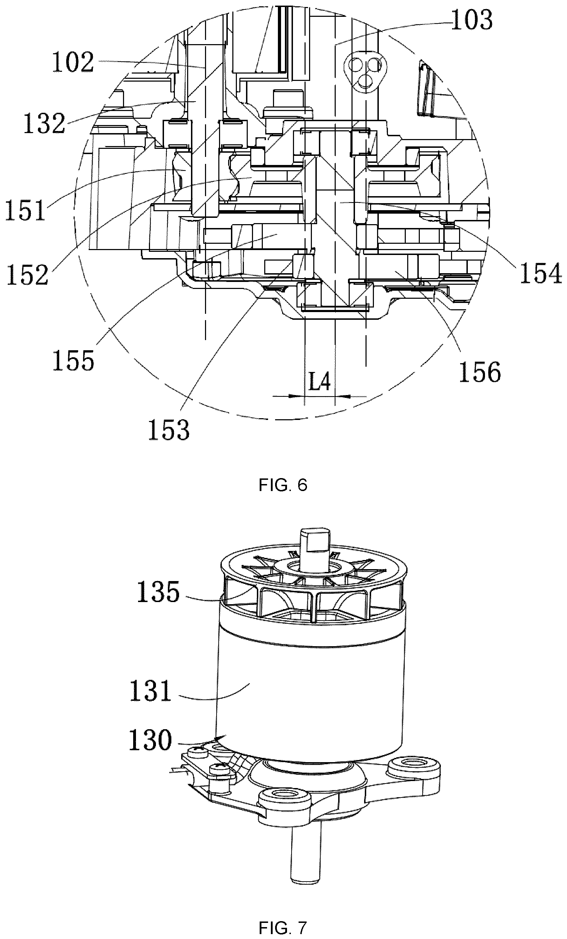

As shown in FIG. 6, the transmission mechanism 150 is configured to reduce the rotational speed of the motor 131. The transmission mechanism 150 includes a first gear 151, a second gear 152, and an eccentric assembly 153. The motor 131 includes a motor shaft 132 extending substantially along a second straight line 102. The first gear 151 is sleeved on the motor shaft 132. The transmission mechanism 150 includes a transmission shaft 154 extending substantially along a third straight line 103. The second straight line 102 is parallel to but does not coincide with the third straight line 103. The second gear 152 and the eccentric assembly 153 are sleeved on the transmission shaft 154. The first gear 151 and the second gear 152 are externally engaged. The diameter of the second gear 152 is greater than the diameter of the first gear 151 to achieve deceleration. The second gear 152 and the first gear 151 are externally engaged through one layer of gears to decelerate the motor 131 at a single stage. The gear ratio of the second gear 152 to the first gear 151 is greater than or equal to 3 and less than or equal to 6. In some examples, the gear ratio of the second gear 152 to the first gear 151 is greater than or equal to 3 and less than or equal to 5. In some examples, the gear ratio of the second gear 152 to the first gear 151 is greater than or equal to 3 and less than or equal to 4. In some examples, the gear ratio of the second gear 152 to the first gear 151 is greater than or equal to 3.5 and less than or equal to 4. It can be obtained through research that the first gear 151 and the second gear 152 are externally engaged and the gear ratio of the second gear 152 to the first gear 151 is greater than or equal to 3 and less than or equal to 6 so that the structure is simple and the transmission mechanism 150 has a small power loss, extending the battery life of the hedge trimmer 100.

The eccentric assembly 153 includes a first eccentric member 155 and a second eccentric member 156. The eccentric assembly 153 has an eccentricity L4. It is to be understood that the first eccentric member 155 and the second eccentric member 156 have the same eccentricity L4. The definition of the eccentricity L4 belongs to the existing art and is not repeated here. The eccentric assembly 153 directly drives the blade assembly 140 to reciprocate. The ratio of the idle speed of the eccentric assembly 153 to the eccentricity L4 of the eccentric assembly 153 is greater than or equal to 180 rpm/mm and less than or equal to 315 rpm/mm. In some examples, the ratio of the idle speed of the eccentric assembly 153 to the eccentricity L4 of the eccentric assembly 153 is greater than or equal to 200 rpm/mm and less than or equal to 300 rpm/mm. In some examples, the ratio of the idle speed of the eccentric assembly 153 to the eccentricity L4 of the eccentric assembly 153 is greater than or equal to 220 rpm/mm and less than or equal to 280 rpm/mm. In some examples, the ratio of the idle speed of the eccentric assembly 153 to the eccentricity L4 of the eccentric assembly 153 is greater than or equal to 230 rpm/mm and less than or equal to 270 rpm/mm. In this manner, the transmission mechanism 150 has a small power loss, extending the battery life of the hedge trimmer 100.

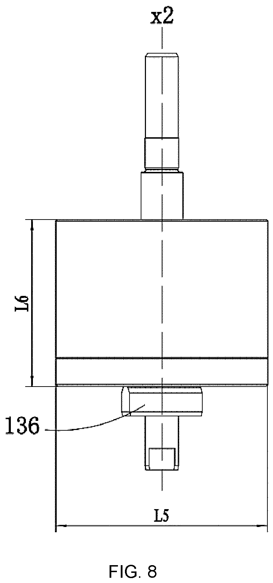

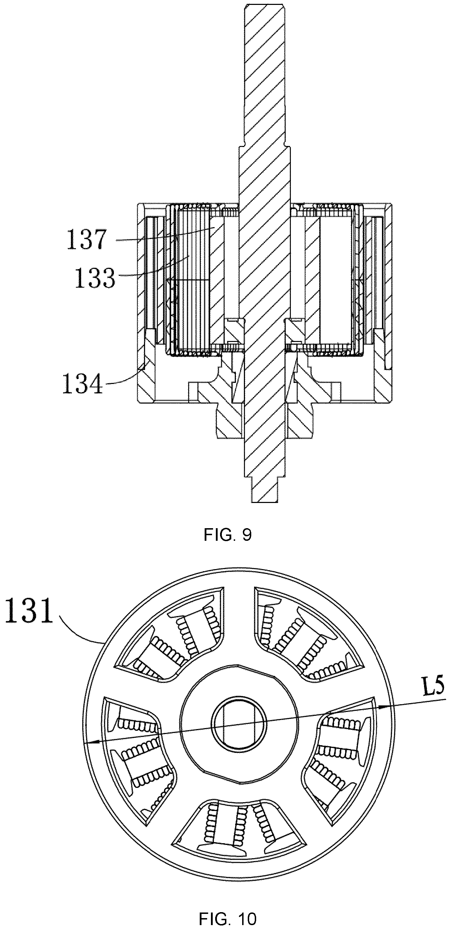

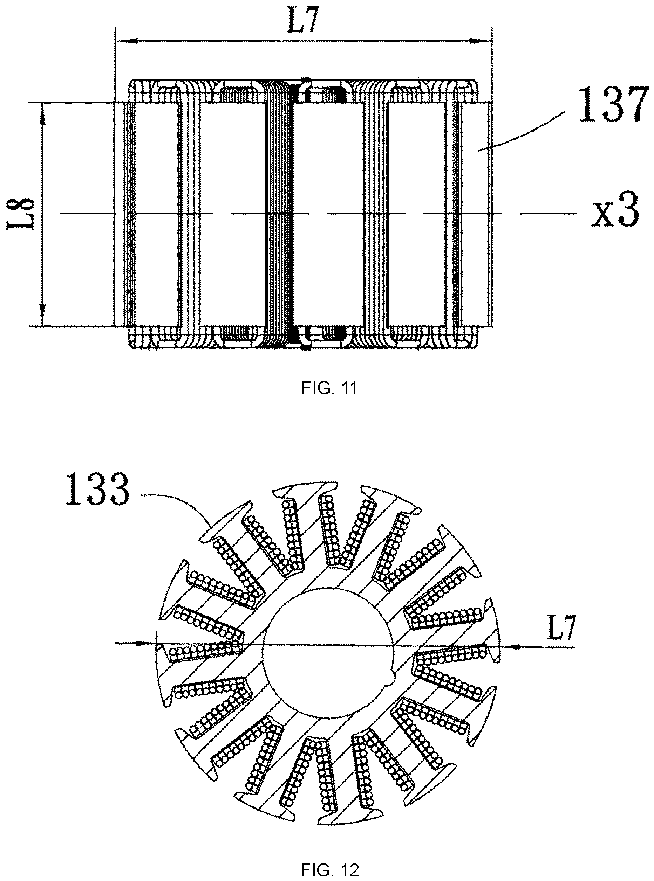

As shown in FIGS. 7 to 12, in this example, the motor 131 is an outrunner. The motor 131 includes a stator 133 and a rotor 134. The rotor 134 is sleeved on the stator 133. The outer diameter L5 of the motor is greater than or equal to 45 mm and less than or equal to 70 mm. In some examples, the outer diameter L5 of the motor is greater than or equal to 45 mm and less than or equal to 65 mm. In some examples, the outer diameter L5 of the motor is greater than or equal to 50 mm and less than or equal to 70 mm. In some examples, the outer diameter L5 of the motor is greater than or equal to 50 mm and less than or equal to 65 mm. The stator 133 includes a core 137, the core 137 is formed by multiple laminations stacked, and the core 137 has a stack length L8 in a direction in which the laminations are stacked. The ratio of the outer diameter L5 of the motor to the stack length L8 is greater than or equal to 1.7 and less than or equal to 3. In some examples, the ratio of the outer diameter L5 of the motor to the stack length L8 is greater than or equal to 2 and less than or equal to 3. In some examples, the ratio of the outer diameter L5 of the motor to the stack length L8 is greater than or equal to 2.2 and less than or equal to 2.8. In some examples, the ratio of the outer diameter L5 of the motor to the stack length L8 is greater than or equal to 2 and less than or equal to 4. In some examples, the ratio of the outer diameter L5 of the motor to the stack length L8 is about 1.7, 1.8, 1.9, 2, or 2.1. In some examples, the motor 131 may be an inrunner. It is obtained through research that the outer diameter L5 of the motor is greater than or equal to 50 mm and less than or equal to 65 mm and the ratio of the outer diameter L5 of the motor to the stack length L8 is greater than or equal to 1.7 and less than or equal to 3 so that the transmission mechanism 150 has a small power loss, extending the battery life of the hedge trimmer 100.

The length L6 by which the motor extends along the motor shaft is greater than or equal to 18 mm and less than or equal to 40 mm. In some examples, the length L6 by which the motor extends along the motor shaft is greater than or equal to 20 mm and less than or equal to 35 mm. In some examples, the length L6 by which the motor extends along the motor shaft is greater than or equal to 25 mm and less than or equal to 30 mm. In this example, the outer diameter L5 of the motor is about 50 mm and the length L6 by which the motor extends along the motor shaft is about 35 mm. In this example, since the motor 131 is the outrunner, it may be considered that the outer diameter of the rotor 134 is about 50 mm and the length by which the rotor 134 extends along the motor shaft 132 is about 35 mm.

The outer diameter L7 of the stator is greater than or equal to 40 mm and less than or equal to 70 mm. In some examples, the outer diameter L7 of the stator is greater than or equal to 42 mm and less than or equal to 60 mm. In some examples, the outer diameter L7 of the stator is greater than or equal to 43 mm and less than or equal to 50 mm. In some examples, the outer diameter L7 of the stator is greater than or equal to 44 mm and less than or equal to 48 mm.

The stack length L8 of the stator is greater than or equal to 20 mm and less than or equal to 35 mm. In some examples, the stack length L8 of the stator is greater than or equal to 20 mm and less than or equal to 35 mm. In some examples, the stack length L8 of the stator is greater than or equal to 22 mm and less than or equal to 33 mm. In some examples, the stack length L8 of the stator is greater than or equal to 24 mm and less than or equal to 31 mm. In some examples, the stack length L8 of the stator is greater than or equal to 25 mm and less than or equal to 28 mm. In this example, the stack length L8 of the stator is about 25 mm.

The outer diameter L5 of the motor is greater than or equal to 50 mm and less than or equal to 65 mm, the length L6 by which the motor extends along the motor shaft is greater than or equal to 18 mm and less than or equal to 40 mm, the outer diameter L7 of the stator is greater than or equal to 40 mm and less than or equal to 70 mm, and the stack length L8 of the stator is greater than or equal to 20 mm and less than or equal to 35 mm. In this manner, the motor 131 is reasonable in dimension. When used in the hedge trimmer 100, the motor 131 has high efficiency, reasonable dimensions, and a strong load capacity.

As shown in FIGS. 7 to 9, the power device 130 includes a fan 135 and a bearing 136 that at least partially rotate synchronously with the motor 131. The fan 135 dissipates heat for the motor 131, and the bearing 136 connects the motor 131 rotatably to the housing 120. When the motor 131 rotates with no load, the motor 131, the fan 135, and the bearing 136 generate an electromagnetic loss, a fan loss, and a bearing loss, respectively. A sum of the electromagnetic loss, the fan loss, and the bearing loss is defined as a total loss. The loss is measured in W The ratio of the electromagnetic loss to the total loss is greater than or equal to 50 and less than or equal to 80, the ratio of the fan loss to the total loss is greater than or equal to 1 and less than or equal to 5, and the ratio of the bearing loss to the total loss is greater than or equal to 10 and less than or equal to 40. In some examples, the ratio of the electromagnetic loss to the total loss is greater than or equal to 55 and less than or equal to 78, the ratio of the fan loss to the total loss is greater than or equal to 1.5 and less than or equal to 4, and the ratio of the bearing loss to the total loss is greater than or equal to 13 and less than or equal to 35. In some examples, the ratio of the electromagnetic loss to the total loss is greater than or equal to 60 and less than or equal to 70, the ratio of the fan loss to the total loss is greater than or equal to 1.7 and less than or equal to 3, and the ratio of the bearing loss to the total loss is greater than or equal to 15 and less than or equal to 30. It is obtained through research that when the ratio of the electromagnetic loss to the total loss is greater than or equal to 50 and less than or equal to 80, the ratio of the fan loss to the total loss is greater than or equal to 1 and less than or equal to 5, and the ratio of the bearing loss to the total loss is greater than or equal to 10 and less than or equal to 40, the power device 130 has high efficiency, the hedge trimmer 100 has a long battery life, and the hedge trimmer 100 has relatively strong working capabilities under the conditions of a light load and a heavy load. The ratio of the electromagnetic loss to the total loss is the largest through the research and design of the dimensions of the electric motor, the bearing 136 has moderate strength and a moderate loss, and the rotational speed of the fan 135 is reduced through the design of a transmission structure so that the proportion of the fan loss is the smallest and a temperature rise is balanced. In this manner, the proportion of the electromagnetic loss is about three times the proportion of losses of the fan 135 and the bearing. The energy consumption of the trimming accounts for the largest proportion and the energy consumption weakly related to the trimming accounts for a small proportion so that the power device 130 has high efficiency and the hedge trimmer 100 has a long battery life.

The total loss is greater than or equal to 60 W and less than or equal to 100 W In some examples, the total loss is greater than or equal to 70 W and less than or equal to 90 W In some examples, the total loss is about 80 W The electromagnetic loss is greater than or equal to 40 W and less than or equal to 60 W, the fan loss is greater than or equal to 2 W and less than or equal to 5 W, and the bearing loss is greater than or equal to 15 W and less than or equal to 30 W

The output voltage of the battery pack 115 is greater than or equal to 40 V and less than or equal to 62 V and the output current of the battery pack 115 is greater than or equal to 1 A and less than or equal to 1.5 A. In some examples, the output voltage of the battery pack 115 is greater than or equal to 45 V and less than or equal to 58 V and the output current of the battery pack 115 is greater than or equal to 1.1 A and less than or equal to 1.4 A. In some examples, the output voltage of the battery pack 115 is about 56 V and the output current of the battery pack 115 is greater than or equal to 1.2 A and less than or equal to 1.4 A. The hedge trimmer 100 and other power tools are generally matched with the same platform of the battery pack 115. In the case where the platform of the battery pack 115 does not change, that is, the output voltage of the battery pack 115 does not change, the output current of the battery pack 115 is small, the whole machine has a small power loss and high efficiency, and the hedge trimmer 100 has a long battery life. In this example, the capacity of the battery pack 115 is greater than or equal to 5 Ah. When the battery pack 115 is discharged at a current of 1.3 A, the battery life of the hedge trimmer 100 is greater than or equal to 3.5 h, and the battery life is long. When the battery pack 115 is discharged at a current of 1.2 A, the battery life of the hedge trimmer 100 is greater than or equal to 4 h. When the battery pack 115 is discharged at a current of 1.4 A, the battery life of the hedge trimmer 100 is greater than or equal to 3 h. The battery life of the hedge trimmer 100 is long, the user charges or replaces the battery pack 115 at a lower frequency, and the hedge trimmer 100 is convenient to use.

A specific process is described below of analyzing and finding that the improvements of the overall efficiency and the battery life of the single battery pack 115 are facilitated when the outer diameter L5 of the motor is greater than or equal to 45 mm and less than or equal to 70 mm and the ratio of the outer diameter L5 of the motor to the stack length L8 is greater than or equal to 1.7 and less than or equal to 3.

During research, a three-electric model (battery, electric control, and electric drive model), a transmission model, and a blade assembly model are simulated and modeled. After modeling, a simulation model is calibrated with actual measurements of the actual machine. When differences between the simulation model and the actual measurements of the actual machine satisfy standards, the calibration succeeds. Finally, a simulation object is input into the simulation model, and the simulation model is used for simulation and analysis to obtain a superior scheme.

The simulation object in this example includes limitations on the idle speed of an output end of the hedge trimmer and the output current of the battery pack. The rotational speed of the output end of the hedge trimmer may be understood as the rotational speed of the decelerated transmission mechanism and is a rotational speed output by the hedge trimmer. In this example, the decelerated transmission mechanism includes the second gear and the eccentric assembly. The rotational speed of the output end of the hedge trimmer is hereinafter simply referred to as the rotational speed of the hedge trimmer. The torque of the output end of the hedge trimmer may be understood as the torque of the blade assembly and is hereinafter simply referred to as the torque of the hedge trimmer.

**Table 1**

| | Scheme 1 | Scheme 2 | Scheme 3 | Scheme 4 | Scheme 5 | Scheme 6 |
|---|---|---|---|---|---|---|
| Outer diameter × stack length of the motor (mm) | 65×15 | 65×20 | 65×25 | 50×15 | 50×20 | 50×25 |
| Outer diameter/stack length of the motor | 4.3 | 3.25 | 2.6 | 3.3 | 2.5 | 2 |
| Gear ratio | 3.6 | 2.7 | 2.16 | 6.08 | 3.87 | 3.65 |
| Rotational speed of the motor (rpm) | 8280 | 6210 | 4968 | 14000 | 8900 | 8400 |
| Total loss (W) | 97 | 90 | 77 | 128 | 85 | 80 |

Table 1 shows schemes with relatively low total losses and relatively long battery lives, which are obtained after simulation and analysis by using the simulation model in the present application. It can be seen that the total losses of scheme 3, scheme 5, and scheme 6 are less than 90 W and less than or equal to 85 W In scheme 3, scheme 5, and scheme 6, the outer diameter of the motor is greater than or equal to 45 mm and less than or equal to 70 mm and the ratio of the outer diameter of the motor to the stack length is greater than or equal to 1.7 and less than or equal to 3. In other words, when the outer diameter of the motor is greater than or equal to 45 mm and less than or equal to 70 mm and the ratio of the outer diameter of the motor to the stack length is greater than or equal to 1.7 and less than or equal to 3, the total losses of the hedge trimmer are smaller. The total losses of scheme 3 and scheme 6 are the lowest, which are 77 W and 80 W, respectively. Considering that the gear ratio of scheme 6 is greater than or equal to 3 and less than or equal to 6, the gear ratio is relatively large, and the heavy-load capacity of the hedge trimmer is superior to that in scheme 3. Therefore, as an example of the present application, scheme 6 is a scheme of the hedge trimmer with relatively good comprehensive capabilities.

When the outer diameter L5 of the motor is greater than or equal to 45 mm and less than or equal to 70 mm, the stack length of the stator can be designed to be longer, and the ratio of the outer diameter L5 of the motor to the stack length L8 can be greater than or equal to 1.7 and less than or equal to 3. The motor whose outer diameter L5 is greater than or equal to 45 mm and less than or equal to 70 mm has a relatively large volume, a relatively slow rotational speed, and a small iron loss. Therefore, a load of the gears can be transferred to the motor and the gear ratio can be reduced. The gears are externally engaged and have a small gear ratio so that the temperature rise of the gears is small, the rotational speed of the fan can be appropriately reduced, and the fan loss can be reduced.

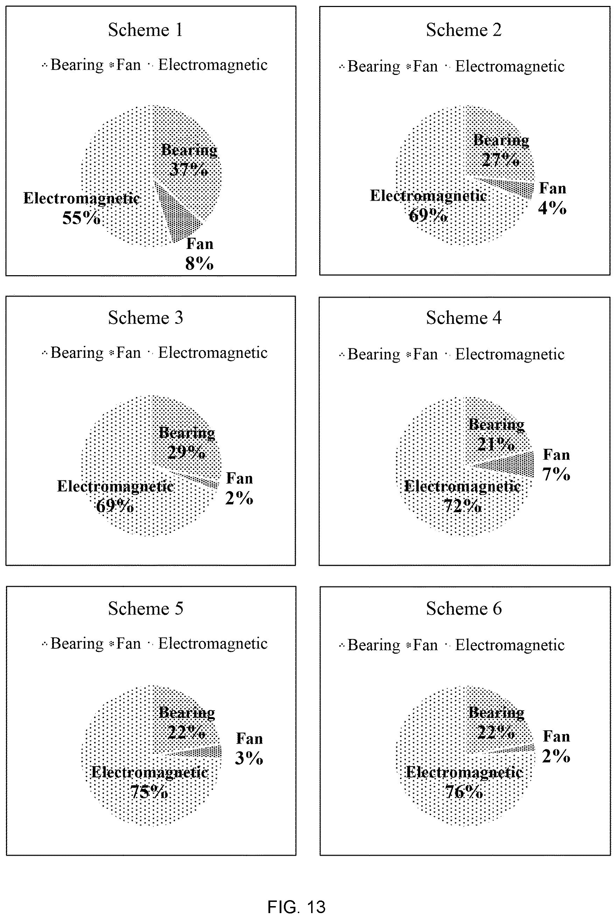

FIG. 13 is a pie chart illustrating the ratios of the electromagnetic loss, fan loss, and bearing loss to the total loss of the hedge trimmer in schemes 1 to 6. In scheme 3, scheme 5, and scheme 6, the ratio of the electromagnetic loss to the total loss is greater than or equal to 50 and less than or equal to 80, the ratio of the fan loss to the total loss is greater than or equal to 1 and less than or equal to 5, and the ratio of the bearing loss to the total loss is greater than or equal to 10 and less than or equal to 40. In scheme 3, scheme 5, and scheme 6, the ratio of the electromagnetic loss to the total loss is greater than or equal to 60 and less than or equal to 80, the ratio of the fan loss to the total loss is greater than or equal to 1 and less than or equal to 4, and the ratio of the bearing loss to the total loss is greater than or equal to 20 and less than or equal to 30.

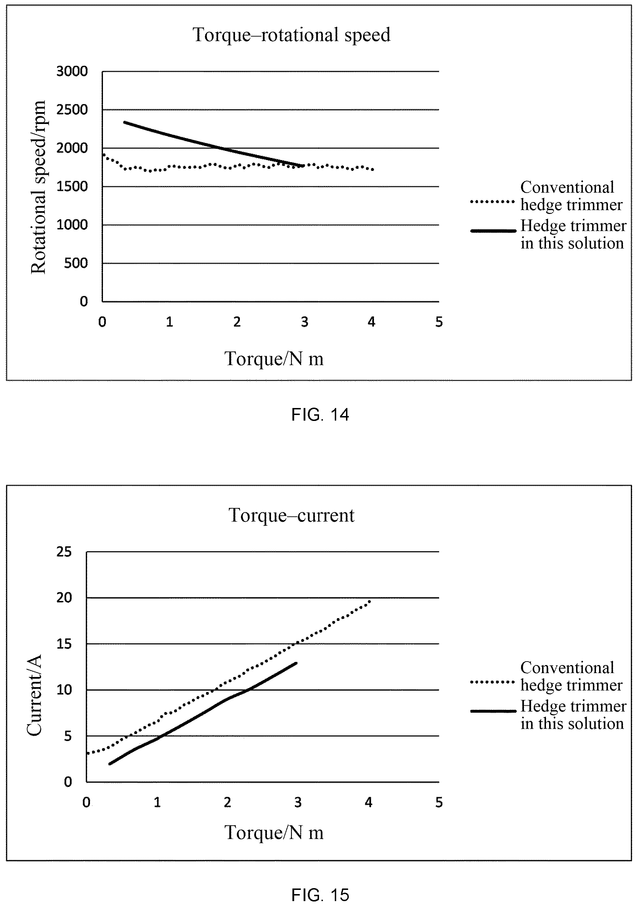

FIGS. 14 to 16 are a graph illustrating relationships between the torque of the hedge trimmer and the rotational speed of the hedge trimmer, a graph illustrating relationships between the torque of the hedge trimmer and the output current of the battery pack, and a graph illustrating relationships between the torque of the hedge trimmer and the efficiency of the hedge trimmer, respectively. Data for drawing the relationship graphs comes from the simulation model of the present application. The three relationship graphs reflect the cutting speed, battery life, and efficiency of the hedge trimmer, respectively. Solid lines in the figures represent parameter changes of the hedge trimmer of the present application under different torque of the hedge trimmer, and dotted lines in the figures represent parameter changes of a conventional hedge trimmer under different torque of the hedge trimmer. It is to be understood that the torque of the hedge trimmer on the market is generally less than 1.7 N m when the hedge trimmer is working. The working conditions of the hedge trimmer are generally divided into no load, a light load, a medium load, and a heavy load. In the case of no load, the motor rotates but the hedge trimmer does not trim plants such as bushes, and the torque of the hedge trimmer is less than 0.1 N m. In the case of the light load, the torque of the hedge trimmer is greater than or equal to 0.1 N m and less than or equal to 0.3 N m. The light load is generally the most common working condition of the hedge trimmer. In the case of the medium load, the torque of the hedge trimmer is greater than or equal to 0.3 N m and less than or equal to 1 N m. In the case of the heavy load, the torque of the hedge trimmer is greater than or equal to 1 N m and less than or equal to 1.7 N m.

FIG. 14 is a graph illustrating the relationships between the torque of the hedge trimmer and the rotational speed of the hedge trimmer. Under the same torque of the hedge trimmer, the higher the rotational speed of the hedge trimmer, the higher the operation efficiency of the hedge trimmer. As can be seen from the figure, under the same torque of the hedge trimmer, the rotational speed of the hedge trimmer of the present application is greater than the rotational speed of the conventional hedge trimmer. Compared with the conventional hedge trimmer, the hedge trimmer of the present application has higher operation efficiency.

FIG. 15 is a graph illustrating the relationships between the torque of the hedge trimmer and the output current of the battery pack. Under the same torque of the hedge trimmer, the lower the output current of the battery pack, the longer the battery pack is used and the longer the battery life of the hedge trimmer. As can be seen from the figure, under the same torque of the hedge trimmer, the output current of the battery pack in the hedge trimmer of the present application is lower than the output current of the battery pack in the conventional hedge trimmer. Compared with the conventional hedge trimmer, the hedge trimmer of the present application has a longer battery life.

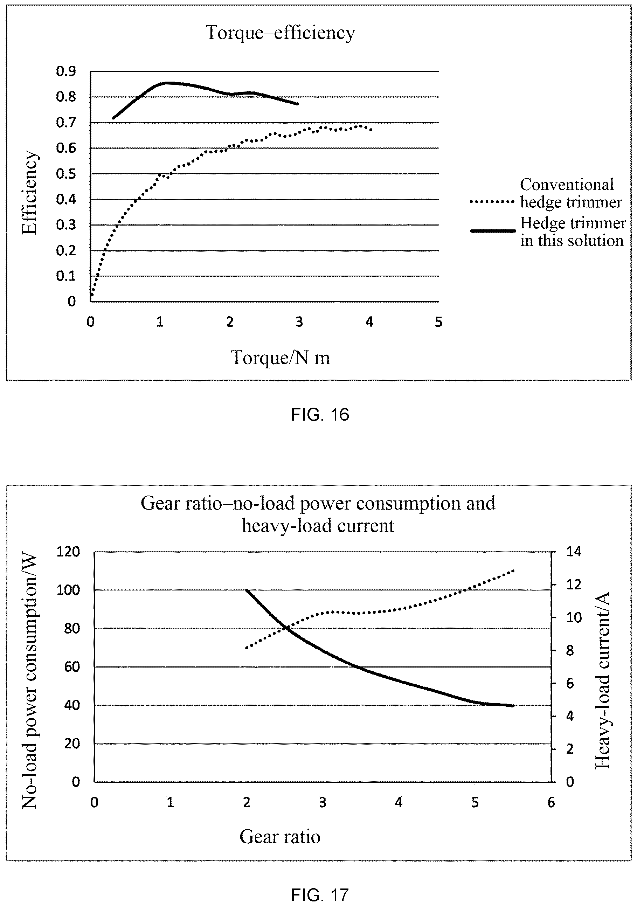

FIG. 16 is a graph illustrating the relationships between the torque of the hedge trimmer and the efficiency of the hedge trimmer. Under the same torque of the hedge trimmer, the higher the efficiency of the hedge trimmer, the lower the power consumption of the hedge trimmer, and the higher the efficiency of the hedge trimmer, the longer the battery life of the hedge trimmer. As can be seen from the figure, under the same torque of the hedge trimmer, the efficiency of the hedge trimmer of the present application is higher than the efficiency of the conventional hedge trimmer. Compared with the conventional hedge trimmer, the hedge trimmer of the present application has higher efficiency, lower power consumption, and a longer battery life. Especially under the working conditions of the light load and the medium load, the efficiency of the hedge trimmer of the present application is much higher than the efficiency of the conventional hedge trimmer, and the battery life of the hedge trimmer of the present application is much longer than the battery life of the conventional hedge trimmer.

FIG. 17 is a graph illustrating relationships between the gear ratio, no-load power consumption, and a heavy-load current. The gear ratio is increased to reduce the rotational speed of the motor and increase the torque of the motor. A mechanical load output by the hedge trimmer is a product of the gear ratio and a load of the motor. In the case where the magnitude of the mechanical load of the hedge trimmer is unchanged, the larger the gear ratio, the smaller the load of the motor and the smaller the current required. It is obtained through simulation that when the gear ratio is greater than or equal to 3 and less than or equal to 6, the curve of the no-load power consumption is relatively smooth. When the gear ratio is greater than or equal to 3 and less than or equal to 5, as the gear ratio increases, the heavy-load current decreases, the heavy-load capacity increases, the current required decreases, and the increase in the gear ratio has a relatively small effect on the no-load power consumption. When the gear ratio is greater than or equal to 3 and less than or equal to 4, the increase in the gear ratio has little effect on the no-load power consumption. Therefore, when the gear ratio is greater than or equal to 3 and less than or equal to 6, the hedge trimmer has small no-load power consumption and a relatively strong heavy-load capacity. The hedge trimmer has balanced working capabilities on the premise of the reduced power consumption.

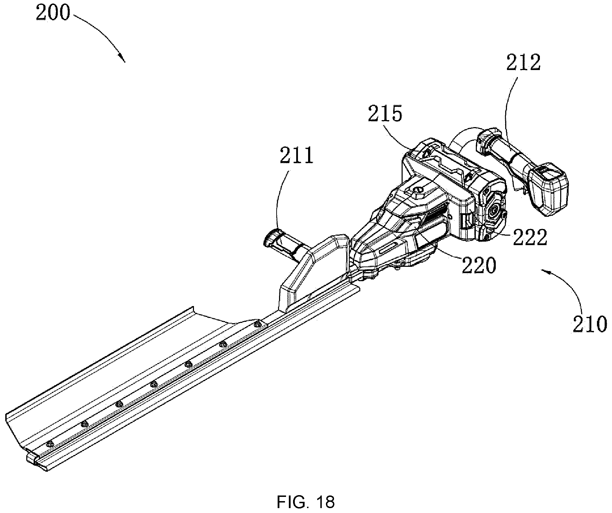

The present application further provides another example of a hedge trimmer. Referring to FIG. 18, this example shows another single-sided hedge trimmer 200. Similar to the hedge trimmer 100, the hedge trimmer 200 may include a first handle 211, a second handle 212, a body 210, and a power device. The first handle 211 and the second handle 212 are disposed on an intermediate portion and a rear portion of the body 210, respectively. The first handle 211 includes a first grip 213 and the second handle 212 includes a second grip 214. The first grip 213 and the second grip 214 are held by the left and right hands of the user, respectively so that the user walks with the hedge trimmer 200 carried by both hands. The body 210 includes a housing 220, and an accommodation cavity is formed on the inner side of the housing 220. The power device includes a motor mounted in the accommodation cavity of the housing 220. The housing 220 further includes a coupling portion 222 for connecting a battery pack 215. The battery pack 215 can provide electrical energy for the motor in the accommodation cavity to drive the hedge trimmer 200 to perform trimming. A difference between the hedge trimmer 200 and the hedge trimmer 100 lies in the position arrangement of the coupling portion on the housing of the body. In the hedge trimmer 100, the coupling portion 122 is located in front of the housing 120 and the mounted battery pack 115 is at least partially located on the front side of the housing 120 or the accommodation cavity, that is, the battery pack 115 is at least partially located in front of the motor. In the hedge trimmer 200, the coupling portion 222 is located behind the housing 220 and the mounted battery pack 215 is at least partially located on the rear side of the housing 220 or the accommodation cavity, that is, the battery pack 215 is at least partially located behind the motor.

The above-described solutions of the hedge trimmer 100 can be unconditionally applied to the hedge trimmer 200, where the numerical settings of the outer diameter of the motor, the outer diameter of the stator, the stack length of the stator, the length by which the motor extends along the motor shaft, the electromagnetic loss, the fan loss, and the bearing loss of the hedge trimmer 100 are also applicable to the hedge trimmer 200, and the effect verification relevant to the numerical settings is also true for the hedge trimmer 200, which are not repeated here.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A hedge trimmer (100, 200), comprising:
a body (110, 210) comprising a housing (120, 220);
a power device (130) comprising a motor disposed in the housing and configured to drive the hedge trimmer to work; and
a battery pack (115, 215) for providing energy for the motor;
wherein the motor comprises a stator (133) and a rotor (134), an outer diameter (L5) of the motor is greater than or equal to 45 mm and less than or equal to 70 mm, the stator comprises a core (137) formed by a plurality of laminations stacked, the core has a stack length (L8) in a direction in which the plurality of laminations are stacked,
the stack length of the stator is greater than or equal to 20 mm and less than or equal to 35 mm, and a ratio of the outer diameter of the motor to the stack length is greater than or equal to 1.7 and less than or equal to 3.

2. The hedge trimmer according to claim 1, wherein an idle speed of the motor is greater than or equal to 8000 rpm and less than or equal to 9000 rpm.

3. The hedge trimmer according to claim 1, further comprising a transmission mechanism (150), wherein the transmission mechanism comprises a first gear (151) and a second gear (152) that are externally engaged, and a gear ratio of the second gear to the first gear is greater than or equal to 3 and less than or equal to 6.

4. The hedge trimmer according to claim 1, further comprising a blade assembly (140) configured to perform a reciprocating motion, wherein the blade assembly comprises a plurality of teeth (144) extending in a same direction.

5. The hedge trimmer according to claim 4, wherein in a case where the blade assembly is lifted horizontally and one end of the blade assembly is fixed, a free end (145) of the blade assembly drops by a height of less than 10 mm.

6. The hedge trimmer according to claim 1, wherein the power device comprises a fan (135) and a bearing (136) that at least partially rotate synchronously with the motor, when the motor rotates with no load, the motor, the fan, and the bearing generate an electromagnetic loss, a fan loss, and a bearing loss, respectively, a sum of the electromagnetic loss, the fan loss, and the bearing loss is defined as a total loss, a ratio of the electromagnetic loss to the total loss is greater than or equal to 50 and less than or equal to 80, a ratio of the fan loss to the total loss is greater than or equal to 1 and less than or equal to 5, and a ratio of the bearing loss to the total loss is greater than or equal to 10 and less than or equal to 40.

7. The hedge trimmer according to claim 6, wherein the total loss is greater than or equal to 60 W and less than or equal to 100 W

8. The hedge trimmer according to claim 6, wherein the electromagnetic loss is greater than or equal to 40 W and less than or equal to 60 W, the fan loss is greater than or equal to 2 W and less than or equal to 5 W, and the bearing loss is greater than or equal to 15 W and less than or equal to 30 W

9. The hedge trimmer according to claim 1, wherein the motor comprises a motor shaft (132), and a length by which the motor extends along the motor shaft is greater than or equal to 18 mm and less than or equal to 40 mm.

10. The hedge trimmer according to claim 1, wherein an outer diameter (L7) of the stator is greater than or equal to 40 mm and less than or equal to 70 mm.

11. The hedge trimmer according to claim 1, further comprising an eccentric assembly (153), wherein a ratio of an idle speed of the eccentric assembly to an eccentricity of the eccentric assembly is greater than or equal to 180 rpm/mm and less than or equal to 315 rpm/mm.

12. The hedge trimmer according to claim 1, further comprising a blade assembly (140) configured to perform a reciprocating motion and a support member (143) configured to support the blade assembly, wherein a torsional stiffness of the support member is greater than or equal to 45 N m/° and less than or equal to 55 N m/°.

13. The hedge trimmer according to claim 1, wherein the ratio of the outer diameter of the motor to the stack length is greater than or equal to 2.2 and less than or equal to 2.8.

14. The hedge trimmer according to claim 1, wherein the outer diameter of the motor is greater than or equal to 50 mm and less than or equal to 65 mm.

15. The hedge trimmer according to claim 1, wherein an output voltage of the battery pack is greater than or equal to 40 V and less than or equal to 62 V and an output current of the battery pack is greater than or equal to 1 A and less than or equal to 1.5 A.
